# EUROPÄISCHE PATENTSCHRIFT

(11) **EP 4 059 646 B1**
(45) Veröffentlichungstag und Bekanntmachung des Hinweises auf die Patenterteilung: **18.11.2026**
(21) Anmeldenummer: 22158896.5
(22) Anmeldetag: 25.02.2022
(51) Int. Cl.: B23F 23/06, B23B 31/30, B23B 31/40

(54) **VERFAHREN ZUR HERSTELLUNG EINER MODULAREN SPANNVORRICHTUNG FÜR ROTATIONSSYMMETRISCHE KÖRPER**
METHOD OF MANUFACTURING A MODULAR CLAMPING DEVICE FOR ROTATIONALLY SYMMETRICAL BODIES
PROCÉDÉ DE FABRICATION D'UN DISPOSITIF DE SERRAGE MODULAIRE POUR CORPS À SYMÉTRIE DE ROTATION

(30) Priorität: 15.03.2021 CH 2772021
(43) Veröffentlichungstag der Anmeldung: 21.09.2022
(73) Patentinhaber: Reishauer AG, 8304 Wallisellen (CH)
(72) Erfinder: GEHRING, Benjamin, 8192 Glattfelden (CH); SEMSEDINI, Saip, 5212 Hausen (CH); STÄUBLI, Dominik Michael, 8050 Zürich (CH); ZIMMERMANN, Roman, 5312 Döttingen (CH)
(74) Vertreter: Detken, Andreas

(56) Entgegenhaltungen:
- CN-A- 109 848 488
- CN-A- 110 449 615
- DE-A1- 3 116 289
- DE-A1- 3 407 315

## Beschreibung

### TECHNISCHES GEBIET

Die vorliegende Erfindung betrifft ein Verfahren zur Herstellung einer modularen Spannvorrichtung zum Aufspannen eines rotationssymmetrischen Körpers ("Rotationsteils") auf einem Spindelkopf einer Motorspindel sowie eine damit gefertigte Spannvorrichtung.

### STAND DER TECHNIK

Bei der spanenden Bearbeitung von rotationssymmetrischen Werkstücken, insbesondere Zahnrädern, wird das zu bearbeitende Werkstück in der Regel drehbar auf einer Motorspindel angeordnet. Zum schnellen und präzisen Aufspannen auf der Motorspindel dient eine Spannvorrichtung (oft auch als "Spannmittel" bezeichnet), die starr mit dem drehbaren Spindelkopf der Motorspindel verbunden wird.

Ein Zahnrad weist meist eine zentrale Bohrung entlang seiner Längsachse auf, und die Spannvorrichtung stellt einen Kraftschluss mit der inneren Begrenzungswand der zentralen Bohrung her. Hierfür sind zwei verschiedene Arten von Spannvorrichtungen mit unterschiedlichen Funktionsprinzipien bekannt: zum einen hydraulische Dehnspanndorne, die eine sich unter hydraulischem Druck nach aussen aufweitende Dehnbüchse aufweisen, und zum anderen mechanische Spanndorne, die durch mechanische Kräfte aufgeweitet werden. Auch für Werkstücke ohne zentrale Bohrung sind hydraulische oder mechanische Spannvorrichtungen in verschiedensten Ausführungen bekannt.

Spannvorrichtungen werden in der Verzahntechnik traditionell werkstückspezifisch ausgelegt. Dabei werden z.B. die Art, Form und Grösse des Werkstücks sowie die Anforderungen des jeweiligen Bearbeitungsverfahrens berücksichtigt. Beispielsweise benötigen Werkstücke mit einem grossen Bohrungsdurchmesser eine andere Spannvorrichtung als Werkstücke mit kleinem Bohrungsdurchmesser, oder Werkstücke mit einer durchgehenden Bohrung konstanten Querschnitts benötigen eine andere Spannvorrichtung als Werkstücke mit einer abgesetzten oder freigedrehten Bohrung, deren Querschnitt sich entlang der Werkstückachse verändert. Die ausgelegte Spannvorrichtung kann daher nur für passende Werkstücke verwendet werden. Eine Mehrfachverwendung für andere Werkstücke ist nicht oder nur in sehr engem Rahmen (z.B. durch die Verwendung von sogenannten Zwischenbüchsen) möglich. Durch die individuellen Spannlösungen sind ein hoher Planungsaufwand und eine hohe Fertigungstiefe erforderlich, was zu einem hohen Fertigungsrisiko, hohen Fertigungskosten und langen Lieferzeiten führt.

Die Prospekte "REISHAUER Clamping Systems hydraulically expanding" und "REISHAUER Clamping Systems mechanically expanding", heruntergeladen von www.reishauer.com am 12.02.2021, offenbaren jeweils eine zweiteilig aufgebaute Spannvorrichtung. Ein Hydro-Dehnspanndorn oder ein mechanisch expandierender Spanndorn ist auf einer Basiseinheit montiert. Die Basiseinheit stellt eine lösbare Verbindung mit dem Spindelkopf her. Die Schnittstelle zwischen der Basiseinheit und dem Spanndorn ist standardisiert. Dadurch kann die Spannvorrichtung flexibel an verschiedene Spindelköpfe angepasst werden. Der eigentliche Spanndorn ist dagegen werkstückspezifisch ausgelegt.

Der Artikel "Let's get clamping" in der Broschüre "LIEBHERR Gear Technology and Automation Systems 2020/2021", Seiten 14-15, heruntergeladen von www.liebherr.com am 12.02.2021, offenbart eine segmentierte Spannvorrichtung mit einem mechanischen Spannelement.

Spannvorrichtungen können unter Umständen eine erhebliche Länge aufweisen. Bei hydraulischen Spannvorrichtungen bedingt dies häufig sehr lange Hydraulikbohrungen für das Hydraulikfluid.

Es ist bekannt, an Spannvorrichtungen eine pneumatische Auflagekontrollvorrichtung vorzusehen. Dazu ist in einer Auflagefläche für das Werkstück eine Messdüse angeordnet, die mit Druckluft beaufschlagt wird. Wenn das Werkstück korrekt auf der Auflagefläche aufliegt, überdeckt dieses die Messdüse. Indem der Durchfluss oder Druck der Druckluft überwacht wird, kann die korrekte Auflage des Werkstücks überprüft werden. Auch für die pneumatische Auflagekontrolle werden in der Spannvorrichtung Bohrungen benötigt, die sehr lang werden können. Lange Bohrungen sind aber fertigungstechnisch nachteilig.

DE 34 07 315 A1 zeigt einen zweiteiligen Dehnspanndorn mit einer Hydraulikkammer und einem auf die Flüssigkeit in der Hydraulikkammer Druck ausübenden Kolben, dessen Stellung mit Hilfe von Luft durch eine Kontrolleinrichtung überprüft wird.

CN 110 449 615 A zeigt ein mehrteilig aufgebautes hydraulisches Spannmittel, bei welchem Druckluft für eine pneumatische Auflagenkontrolle zentral durch eine Zugstange zugeführt wird.

### DARSTELLUNG DER ERFINDUNG

Es ist eine Aufgabe der vorliegenden Erfindung, ein Verfahren zur einfachen und schnellen Herstellung einer Spannvorrichtung anzugeben, die eine einfache Anpassung an unterschiedliche aufzuspannende Rotationsteile ermöglicht, die eine Standardisierung erleichtert und die es durch ihre Bauart ermöglicht, lange Bohrungen zu vermeiden.

Diese Aufgabe wird durch ein Verfahren zur Herstellung einer modularen Spannvorrichtung nach Anspruch 1 gelöst. Weitere Ausführungsformen sind in den abhängigen Ansprüchen angegeben.

Es wird also ein Verfahren angegeben zur Herstellung einer modularen Spannvorrichtung zum Aufspannen eines rotationssymmetrischen Körpers auf einem Spindelkopf einer Motorspindel, um den rotationssymmetrischen Körper zu einer Drehung um eine Längsachse der Spannvorrichtung anzutreiben. Die modulare Spannvorrichtung weist ein Spannelement, das dazu ausgebildet ist, eine Spannverbindung mit dem rotationssymmetrischen Körper herzustellen, und ein erstes Zwischenstück auf. Das Verfahren weist die Schritte auf:
Bereitstellen eines ersten Zwischenstücksortiments mit einer Mehrzahl von vorgefertigten, standardisierten ersten Standard-Zwischenstücken, wobei jedes der ersten Standard-Zwischenstücke ein proximales Ende und ein distales Ende aufweist, wobei jedes der ersten Standard-Zwischenstücke an seinem proximalen Ende eine Schnittstelle zum Spindelkopf oder zu einer auf dem Spindelkopf angeordneten Basiseinheit bereitstellt, und
wobei jedes der ersten Standard-Zwischenstücke an seinem distalen Ende eine Schnittstelle für ein zweites Zwischenstück oder für ein Spannelement bereitstellt, wobei sich die letztgenannten Schnittstellen innerhalb des ersten Zwischenstücksortiments unterscheiden, insbesondere hinsichtlich ihrer radialen Dimensionen und/oder ihres Lochbildes;
Auswählen des ersten Zwischenstücks aus dem ersten Zwischenstücksortiment;
Anfertigen des Spannelements, und
Anordnen des ausgewählten ersten Zwischenstücks relativ zum Spannelement derart, dass das erste Zwischenstück bezüglich der Längsachse in axialer Richtung zwischen dem Spindelkopf und dem Spannelement angeordnet ist, wenn die Spannvorrichtung am Spindelkopf angebracht wird.

Dadurch kann insbesondere einerseits eine starre Verbindung zwischen dem Spindelkopf und dem ausgewählten ersten Zwischenstück, ggfs. über eine dazwischen angeordnete Basiseinheit, hergestellt werden. Andererseits wird eine starre Verbindung zwischen dem ausgewählten ersten Zwischenstück und dem Spannelement, ggfs. über eines oder mehrere weitere Zwischenstücke, hergestellt.

Als starre Verbindung wird in diesem Dokument eine Verbindung bezeichnet, bei welcher eine Relativbewegung der Verbindungspartner in allen Freiheitsgraden gesperrt ist.

Die Spannvorrichtung kann ausserdem ein zweites Zwischenstück aufweisen. In einem solchen Fall kann das Verfahren ausserdem die Schritte aufweisen:
Bereitstellen eines zweiten Zwischenstücksortiments mit einer Mehrzahl von vorgefertigten, standardisierten zweiten Standard-Zwischenstücken, wobei jedes der zweiten Standard-Zwischenstücke ein proximales Ende und ein distales Ende aufweist, wobei jedes der zweiten Standard-Zwischenstücke an seinem proximalen Ende eine Schnittstelle zu einem ersten Standard-Zwischenstück des ersten Zwischenstücksortiments bereitstellt, und wobei jedes der zweiten Standard-Zwischenstücke eine Schnittstelle für das Spannelement oder ein weiteres Zwischenstück bereitstellt, wobei sich die Standard-Zwischenstücke innerhalb des zweiten Zwischenstücksortiments beispielsweise hinsichtlich ihrer Länge entlang der Längsachse unterscheiden;
Auswählen des zweiten Zwischenstücks aus dem zweiten Zwischenstücksortiment; und
Anordnen des zweiten Zwischenstücks in axialer Richtung zwischen dem ausgewählten ersten Zwischenstück und dem Spannelement.

Die modulare Spannvorrichtung kann ausserdem eine Basiseinheit aufweisen. In einem solchen Fall kann das Verfahren des Weiteren umfassen:
Bereitstellen eines Basiseinheitensortiments mit einer Mehrzahl von vorgefertigten, standardisierten Standard-Basiseinheiten, wobei jede der Standard-Basiseinheiten ein proximales Ende und ein distales Ende aufweist, wobei jede der Standard-Basiseinheiten an ihrem proximalen Ende eine Schnittstelle zu einem Spindelkopf bereitstellt, wobei jede der Standard-Basiseinheiten an ihrem distalen Ende eine Schnittstelle zu einem ersten Standard-Zwischenstück aus dem ersten Zwischenstücksortiment bereitstellt;
Auswählen der Basiseinheit aus dem Basiseinheitensortiment; und
Anordnen der ausgewählten Basiseinheit relativ zum ersten Zwischenstück derart, dass die Basiseinheit in axialer Richtung zwischen dem Spindelkopf und dem ausgewählten ersten Zwischenstück angeordnet ist, wenn die Spannvorrichtung am Spindelkopf angebracht wird.

Es wird also nur das Spannelement spezifisch für den aufzuspannenden Körper angefertigt. Die Basiseinheit und die Zwischenstücke werden dagegen gemäss einem Baukastensystem aus spezifisch aufeinander abgestimmten Sortimenten mit standardisierten Bauteilen entnommen. Dadurch wird die Herstellung stark vereinfacht. Gleichzeitig wird die Prozesssicherheit verbessert, und der Zeitbedarf für die Herstellung wird verringert.

Das Spannelement kann ein hydraulisches Spannelement sein, das dazu ausgebildet ist, die Spannverbindung mit dem rotationssymmetrischen Körper unter Einwirkung eines hydraulischen Drucks herzustellen, wobei das hydraulische Spannelement einen Spannzylinder und einen darin verschiebbar angeordneten Spannkolben zur Veränderung des hydraulischen Drucks aufweist. Das erste Zwischenstück kann eine durchgehende zentrale Bohrung entlang der Längsachse aufweisen. Die Spannvorrichtung kann ein Betätigungselement für den Spannkolben aufweisen, das in der zentralen Bohrung des ersten Zwischenstücks angeordnet ist und in dieser Bohrung axial entlang der Längsachse bewegbar ist.

Das Spannelement kann also ein Hydro-Dehnspannelement mit integriertem Spannzylinder und Spannkolben sein. Die Betätigung des Spannkolbens kann mit einem Betätigungselement erfolgen, das auf Druck oder Zug wirken kann. Dieses Betätigungselement, das z.B. stangenförmig sein kann, ist bevorzugt durch ein erstes Zwischenstück geführt, das axial zwischen dem Spindelkopf und dem Spannelement angeordnet ist. Dadurch können die Hydraulikbohrungen sehr kurz gehalten werden. Gleichzeitig wird ein modularer Aufbau erreicht, der eine sehr einfache Anpassung an unterschiedliche Rotationsteile ermöglicht. Insbesondere kann das erste Zwischenstück so ausgestaltet werden, dass es eine Anpassung an unterschiedliche Spindelköpfe oder unterschiedliche Basiseinheiten ermöglicht, während es eine standardisierte Schnittstelle zum Spannelement oder einem weiteren Zwischenstück bereitstellt. Insbesondere kann das erste Zwischenstück eine standardisierte Schnittstelle in einer von mehreren vorgegebenen, ebenfalls standardisierten Grössen bereitstellen, um das eigentliche Spannelement direkt oder über weitere Zwischenstücke mit dem ersten Zwischenstück zu verbinden. Somit braucht nur noch das eigentliche Spannelement werkstückspezifisch ausgestaltet zu werden, während für die Zwischenstücke auf Sortimente standardisierter Bauteile zurückgegriffen werden kann.

In einigen Ausführungsformen kann die Spannvorrichtung aufweisen:
ein Auflageelement zur axialen Auflage des rotationssymmetrischen Körpers, wenn der rotationssymmetrische Körper auf der Spannvorrichtung aufgespannt ist; und
eine pneumatische Auflagekontrollvorrichtung, die mindestens eine im Auflageelement angeordnete Messdüse umfasst,
wobei das erste Zwischenstück eine dezentral verlaufende Durchleitungsbohrung zur Durchleitung eines Messfluids, insbesondere von Druckluft, für die Messdüse aufweist.

Es wird also ein erstes Zwischenstück vorgesehen, das sich axial zwischen dem Spindelkopf und dem Spannelement befindet. Durch das Zwischenstück kann eine Durchleitungsbohrung für ein Messfluid, insbesondere Druckluft, geführt sein. Die Zufuhr des Messfluids zur Messdüse kann also durch mehrere, separat gefertigte und axial hintereinander angeordnete Bauteile hindurch erfolgen, darunter auch durch das Zwischenstück. In jedem dieser Bauteile können die erforderlichen Bohrungen kürzer gehalten werden, als wenn die Spannvorrichtung einen einzigen, einstückigen Grundkörper aufweisen würde. Wiederum wird zudem ein modularer Aufbau erreicht, der eine sehr einfache Anpassung an unterschiedliche Rotationsteile und eine sehr vorteilhafte Standardisierung ermöglicht.

In vorteilhaften Ausführungsformen weist das erste Zwischenstück eine durchgehende zentrale Bohrung entlang der Längsachse auf, und die Durchleitungsbohrung mündet in diese zentrale Bohrung hinein, so dass das Messfluid durch die zentrale Bohrung des ersten Zwischenstücks hindurch zur Messdüse geführt werden kann. Eine Verbindungsleitung für das Messfluid, die z.B. aus mehreren Bohrungsabschnitten gebildet sein kann, kann dann dazu dienen, Messfluid, das in die zentrale Bohrung des ersten Zwischenstücks geleitet wurde, von dieser zentralen Bohrung weiter zur Messdüse zu leiten. Auf diese Weise kann die dezentrale Durchführungsbohrung im ersten Zwischenstück besonders kurz gestaltet werden. Eine zentrale Bohrung kann im ersten Zwischenstück zudem oft wesentlich einfacher und sicherer gefertigt werden als eine dezentrale Bohrung.

Die Spannvorrichtung kann wiederum ein Betätigungselement zum Betätigen des Spannelements aufweisen, wobei das Betätigungselement in der zentralen Bohrung des ersten Zwischenstücks angeordnet ist und in dieser Bohrung axial bewegbar ist. Das Betätigungselement kann dabei in der Bohrung derart mit radialem Spiel angeordnet sein, dass zwischen dem Betätigungselement und einem die Bohrung begrenzenden Wandbereich des ersten Zwischenstücks ein Ringraum zur Durchleitung des Messfluids verbleibt. Um das Totvolumen für das Messfluid zu reduzieren, wird dieser Ringraum möglichst klein gehalten. Bevorzugt weist der Ringraum in radialer Richtung eine Ausdehnung auf, die nirgends grösser als 1 mm ist, besonders bevorzugt nirgends grösser als 0.5 mm. Um ein Entweichen des Messfluids in proximaler Richtung zu verhindern, kann zwischen dem Betätigungselement und dem ersten Zwischenstück in einem proximal von der Mündungsstelle gelegenen Bereich eine umlaufende Dichtung ausgebildet sein.

Das Spannelement in solchen Ausführungsformen kann hydraulisch oder mechanisch wirken. Vorzugsweise handelt es sich wiederum um ein hydraulisches Spannelement (Hydro-Dehnspannelement), das dazu ausgebildet ist, die Spannverbindung unter Einwirkung eines hydraulischen Drucks herzustellen. Dazu kann das hydraulische Spannelement wiederum einen Spannzylinder und einen darin verschiebbar angeordneten Spannkolben zur Veränderung des hydraulischen Drucks aufweisen, wobei der Spannkolben durch das Betätigungselement betätigbar ist.

Die Spannvorrichtung kann eine Kolbenstange aufweisen, die mit dem Spannkolben zusammenwirkt, um den Spannkolben entlang der Längsachse zu verschieben, wobei die Kolbenstange in einer proximalen Richtung aus dem Spannelement herausragt. Das Betätigungselement ist dann vorzugsweise separat von der Kolbenstange ausgebildet und weist ein distales Ende auf, das mit der Kolbenstange zusammenwirkt, um die Kolbenstange entlang der Längsachse zu verschieben, sowie ein proximales Ende, das in der proximalen Richtung aus dem ersten Zwischenstück herausragt, um eine Betätigung des Betätigungselements zu ermöglichen. Dadurch kann die Betätigung der erfindungsgemäss hergestellten Spannvorrichtung letztlich genauso erfolgen, wie wenn es sich um eine Spannvorrichtung aus dem Stand der Technik handeln würde, ohne auf die Vorteile der Erfindung zu verzichten.

Das Spannelement kann dazu ausgebildet sein, eine Spannverbindung am Innenumfang einer Bohrung des rotationssymmetrischen Körpers herzustellen. Wenn es sich um ein hydraulisches Spannelement handelt, kann es dazu eine Spannbüchse aufweisen, die dazu ausgebildet ist, sich unter Einwirkung des hydraulischen Drucks radial aufzuweiten. Man spricht dann auch von einem Hydro-Dehnspanndorn. Dabei ermöglicht es die Erfindung, dass die Spannbüchse den Spannzylinder zumindest teilweise radial umgibt. Dies ergibt eine besonders kurze Bauweise des Spannelements, mit entsprechend kurzen Hydraulikbohrungen. Wenn das Spannelement dazu ausgebildet ist, die Spannverbindung am Innenumfang einer Bohrung des rotationssymmetrischen Körpers herzustellen, ist das Auflageelement vorzugsweise ringförmig und weist einen grösseren Durchmesser als die Spannbüchse auf. Das Spannelement kann aber auch dazu ausgebildet sein, die Spannverbindung auf andere Weise als am Innenumfang einer Bohrung herzustellen, insbesondere an einem Aussenumfang des rotationssymmetrischen Körpers. Wenn das Spannelement hydraulisch wirkt, spricht man dann von einem Hydro-Dehnspannfutter. Entsprechend kann das Auflageelement eine andere Form als die eines Rings aufweisen.

Die Spannvorrichtung kann ausserdem ein zweites Zwischenstück aufweisen, wobei das zweite Zwischenstück in axialer Richtung zwischen dem ersten Zwischenstück und dem Spannelement angeordnet ist. Das erste und das zweite Zwischenstück können dann unterschiedliche Funktionen wahrnehmen. Beispielsweise kann das erste Zwischenstück an seinem proximalen Ende eine standardisierte Schnittstelle zur Basiseinheit bereitstellen, während es an seinem distalen Ende unterschiedliche Durchmesser aufweisen kann. Das zweite Zwischenstück kann wiederum unterschiedliche Längen aufweisen, um eine Anpassung der Länge der Spannvorrichtung an die konkreten Bedürfnisse zu ermöglichen.

Auch das zweite Zwischenstück weist vorzugsweise eine durchgehende zentrale Bohrung entlang der Längsachse auf, wobei sich diese Bohrung in axialer Richtung an die durchgehende zentrale Bohrung des ersten Zwischenstücks anschliesst. Wenn ein Messfluid durch die zentrale Bohrung des ersten Zwischenstücks geführt wird, so ist es von Vorteil, wenn das Messfluid anschliessend auch weiter durch die zentrale Bohrung des zweiten Zwischenstücks geführt wird. Das Betätigungselement kann sich ebenfalls in die zentrale Bohrung des zweiten Zwischenstücks hinein erstrecken.

Selbstverständlich ist die Zahl der Zwischenstücke nicht begrenzt, und es ist denkbar, mehr als zwei Zwischenstücke vorzusehen. Für die weiteren Zwischenstücke gelten dann ähnliche Überlegungen wie für das zweite Zwischenstück.

Die Spannvorrichtung kann ausserdem eine Basiseinheit aufweisen, die in axialer Richtung zwischen dem Spindelkopf und dem ersten Zwischenstück angeordnet ist. Insbesondere kann die Basiseinheit so ausgestaltet werden, dass sie eine Anpassung an unterschiedliche Spindelköpfe ermöglicht, während sie eine standardisierte Schnittstelle zum ersten Zwischenstück bereitstellt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Spannvorrichtung hergestellt nach einem Verfahren gemäss einer Ausführungsform der Erfindung, mit einem darauf aufgespannten Werkstück;
- Fig. 2: einen zentralen Längsschnitt durch die Spannvorrichtung der Fig. 2;
- Fig. 3: eine vergrösserte Darstellung des Ausschnitts III der Fig. 3;
- Fig. 4: ein schematisches Flussdiagramm für ein Verfahren zur Herstellung einer Spannvorrichtung gemäss einer Ausführungsform der Erfindung; und
- Fig. 5: einen schematischen zentralen Längsschnitt durch eine Spannvorrichtung des Standes der Technik.

### BESCHREIBUNG BEVORZUGTER AUSFÜHRUNGSFORMEN

### Aufbau einer Spannvorrichtung gemäss einem Ausführungsbeispiel

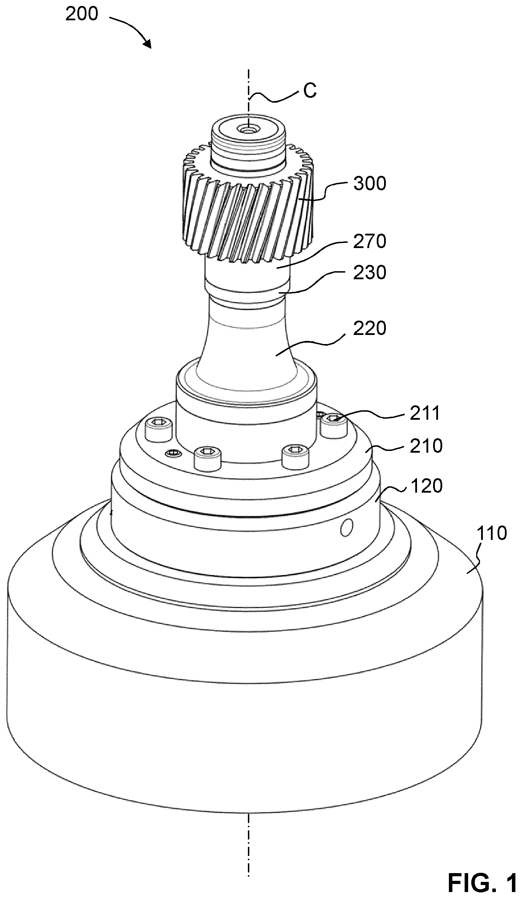

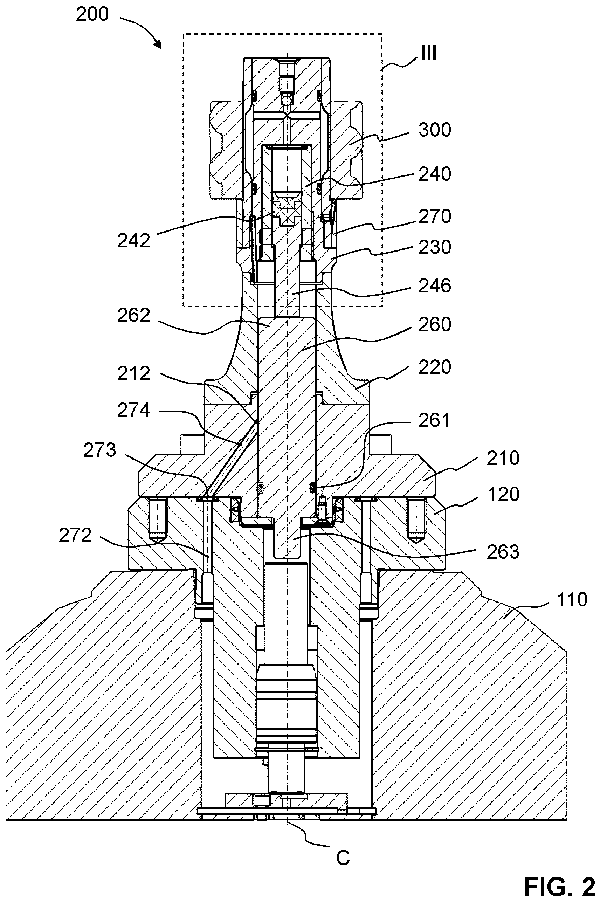

In den Figuren 1 bis 3 ist eine Spannvorrichtung 200 hergestellt nach einem Verfahren gemäss einem Ausführungsbeispiel der Erfindung illustriert.

Die Spannvorrichtung 200 ist dazu vorgesehen, auf einer Motorspindel für eine Drehung um eine Längsachse C angetrieben zu werden. Die Motorspindel weist einen Spindelkopf 110 auf, auf dem eine optionale Basiseinheit 120 angebracht ist. Die Basiseinheit 120 ist zerstörungsfrei lösbar starr am Spindelkopf 110 fixiert, z.B. mit einem nicht dargestellten Schnellspannsystem oder mit nicht dargestellten Schrauben. Auf der Basiseinheit 120 ist die eigentliche Spannvorrichtung 200 montiert. Die Spannvorrichtung 200 weist in axialer Richtung zwischen ihrem spindelseitigen proximalen Ende und ihrem werkstückseitigen distalen Ende nacheinander die folgenden Komponenten auf: Ein erstes Zwischenstück 210 ist auf der Basiseinheit 120 montiert. Das erste Zwischenstück 210 ist zerstörungsfrei entfernbar mit Schrauben 211 starr an der Basiseinheit 210 fixiert, kann aber z.B. auch mit einem Schnellspannsystem fixiert sein. Ein zweites Zwischenstück 220 ist starr am ersten Zwischenstück 210 angebracht. Das zweite Zwischenstück 220 ist permanent mit dem ersten Zwischenstück 210 verbunden, z.B. durch eine Schweissverbindung. Auch diese Verbindung kann aber alternativ auch zerstörungsfrei lösbar ausgebildet sein, z.B. als Schraubverbindung. Auf dem zweiten Zwischenstück 220 ist ein Hydro-Dehnspanndorn 230 angebracht. Der Hydro-Dehnspanndorn 230 ist wiederum permanent mit dem zweiten Zwischenstück 220 starr verbunden, z.B. durch eine Schweissverbindung, kann aber auch zerstörungsfrei lösbar mit dem zweiten Zwischenstück verbunden sein. Auf dem Hydro-Dehnspanndorn 230 ist ein Werkstück 300 mit einer zentralen Bohrung aufgespannt. Eine ringförmige Auflagehülse 270 umgibt einen Bereich des Hydro-Dehnspanndorns 230 radial und bildet eine ringförmige, ebene axiale Auflagefläche für das Werkstück 300.

Die Formgebung und die Dimensionen des proximalen Endes der Basiseinheit 120 sind weitgehend durch die Formgebung und die Dimensionen des Spindelkopfs 110 vorgegeben und sind unabhängig von der Formgebung und den Dimensionen des aufzuspannenden Werkstücks. An ihrem distalen Ende stellt die Basiseinheit 120 eine standardisierte Schnittstelle für das erste Zwischenstück 210 zur Verfügung.

Das erste Zwischenstück 210 dient in erster Linie dazu, eine Anpassung zwischen den radialen Dimensionen der Basiseinheit 210 und den radialen Dimensionen der nachfolgenden Komponenten 220, 230 herzustellen. Im vorliegenden Beispiel ist der Aussendurchmesser des ersten Zwischenstücks 210 am distalen Ende wesentlich kleiner als am proximalen, spindelseitigen Ende und dadurch auf einen vorgegebenen Grössenbereich von Werkstücken angepasst. Das erste Zwischenstück 210 übernimmt zudem eine wichtige Rolle bei der Druckluftführung für eine pneumatische Auflagekontrollvorrichtung, wie nachfolgend noch näher erläutert wird. Es weist dazu verschiedene Bohrungen auf, die am proximalen Ende ein Lochbild definieren.

Das zweite Zwischenstück 220 dient in erster Linie dazu, die axiale Länge der Spannvorrichtung 200 an die Vorgaben anzupassen. Beispielsweise ist die Lage der Werkstückmitte relativ zum Ende des Spindelkopfs in der Regel durch die Maschinenkonstruktion vorgegeben. Für ein axial langgestrecktes Werkstück wird das zweite Zwischenstück daher in der Regel kürzer sein als für ein axial sehr kurzes Werkstück.

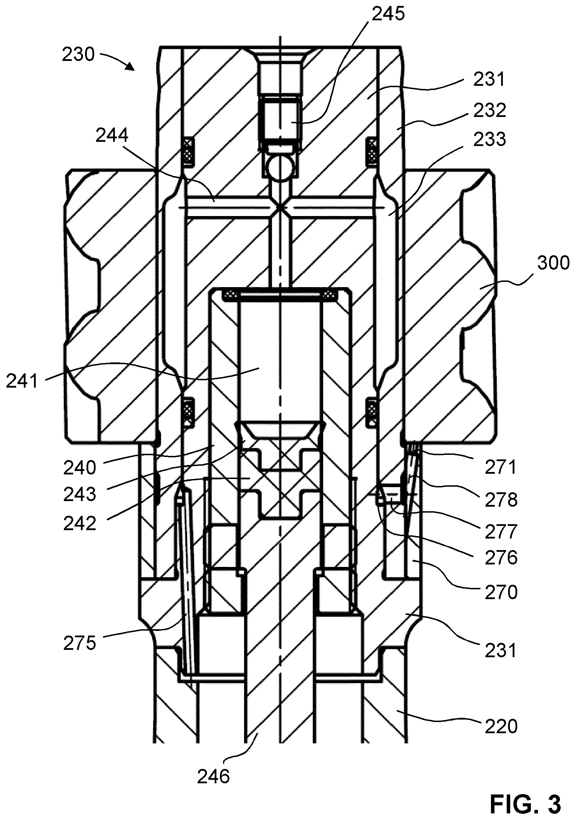

Der Hydro-Dehnspanndorn 230 dient dazu, das Werkstück 300 an der Spannvorrichtung zu fixieren. Der Aufbau des Hydro-Dehnspanndorns 230 geht aus der Fig. 3 hervor. Er umfasst einen zapfenförmigen Grundkörper 231, der von einer Dehnbüchse 232 umgeben ist. Die Dehnbüchse 232 weist aussenumfänglich mindestens einen Wandbereich mit reduzierter Wandstärke auf. Zwischen diesem Wandbereich und dem Grundkörper 231 ist eine Dehnkammer 233 ausgebildet, die mit einem Hydraulikmedium beaufschlagt werden kann. Unter dem Druck des Hydraulikmediums weitet sich der Wandbereich elastisch nach aussen auf und erzeugt so eine radial nach aussen gerichtete Spannkraft auf die Innenwand der zentralen Bohrung des Werkstücks 300. Die Dehnbüchse 232 wird also durch Beaufschlagung mit hydraulischem Druck in Radialrichtung verformt. Die Dehnbüchse steht dabei in Wechselwirkung mit einer Spannfläche des Werkstücks 300, in deren Richtung das Spannelement verformbar ist.

### Druckerzeugung

Im Inneren der Spannvorrichtung 200 befinden sich verschiedene Komponenten, um einen hydraulischen Druck in der Dehnkammer 233 zu erzeugen. Insbesondere ist in den Grundkörper 231 des Hydro-Dehnspanndorns 230 zentral ein hohler Spannzylinder 240 eingepasst. Der Spannzylinder 240 ist im vorliegenden Beispiel teilweise radial von der Dehnbüchse 232 umgeben. Der Spannzylinder 240 kann aber auch axial versetzt zur Dehnbüchse angeordnet sein; das ist insbesondere bei kleinen Spanndurchmessern von Vorteil. Dazu kann der Hydro-Dehnspanndorn 230 zweiteilig aufgebaut sein, mit zwei axial hintereinander angeordneten Teilen, wobei der Spannzylinder 240 in einem dieser Teile angeordnet ist und die Dehnbüchse 232 am anderen Teil angeordnet ist. Ein Spannkolben 242 mit Dichtungselement 243 ist axial verschiebbar im Spannzylinder 240 geführt und begrenzt gemeinsam mit dem Spannzylinder 240 ein Hydraulikreservoir 241 für das inkompressible Hydraulikmedium, typischerweise ein Hydrauliköl. Vom Hydraulikreservoir 241 führen Hydraulikbohrungen 244 zur Führung des Hydraulikmediums zu der Dehnkammer 233. Durch ein Befüllventil 245 können das Hydraulikreservoir 241, die Hydraulikbohrungen 244 und die Dehnkammer 233 mit dem Hydraulikmedium befüllt werden.

Die Basiseinheit 120, das erste Zwischenstück 210 und das zweite Zwischenstück 220 weisen jeweils eine durchgehende zentrale axiale Bohrung auf. Die zentrale Bohrung endet am Hydraulikzylinder 240 im Hydro-Dehnspanndorn 230.

Der Spannkolben 242 wird durch eine auf Druck wirkende Kolbenstange 246 betätigt. Die Kolbenstange 246 ragt in proximaler Richtung aus dem Spannelement 230 heraus. Ein Betätigungselement in Form einer Betätigungsstange 260 dient dazu, mit seinem distalen Ende 262 einen axialen mechanischen Druck auf die Kolbenstange 246 und somit auf den Spannkolben 242 auszuüben, um den Druck im Spannzylinder 240 zu verändern. Die Betätigungsstange 260 ist durch die zentralen Bohrungen des ersten und zweiten Zwischenstücks 210, 220 hindurchgeführt. Das proximale Ende 263 der Betätigungsstange 260 steht in proximaler Richtung axial aus dem ersten Zwischenstück 210 vor und ragt in die zentrale Bohrung der Basiseinheit 120 hinein. An diesem vorstehenden Ende kann die Betätigungsstange 260 in die distale Richtung gepresst werden, um den Druck im Hydraulikreservoir 251 zu verändern. Dies kann beispielsweise durch einen zeichnerisch nicht dargestellten hydraulischen Aktor erfolgen, der in der Basiseinheit 120 angeordnet ist.

Zwischen ihrem proximalen Ende 263 und ihrem distalen Ende 262 weist die Betätigungsstange 260 einen aufgeweiteten, zylindrischen Bereich auf. Der Aussendurchmesser des aufgeweiteten Bereichs ist so gewählt, dass die Betätigungsstange 260 mit radialem Spiel in den zentralen Bohrungen des ersten und zweiten Zwischenstücks 210, 220 verschiebbar ist.

### Pneumatische Auflagekontrolle

Eine pneumatische Auflagekontrollvorrichtung dient dazu, zu überprüfen, ob das Werkstück 300 korrekt auf den Hydro-Dehnspanndorn 230 aufgeschoben wurde. Das Werkstück 300 liegt auf einer Werkstück-Auflagefläche der Auflagehülse 270 axial auf. Die Auflagekontrollvorrichtung umfasst eine oder mehrere Messdüsen 271 (siehe Fig. 3), die in der Werkstück-Auflagefläche der Auflagehülse 270 angeordnet sind. Die Messdüsen werden wie folgt mit Druckluft versorgt: Im Inneren der Basiseinheit 120 sind parallel zur Längsachse C verlaufende Versorgungsbohrungen 272 für die Druckluftversorgung vorgesehen, die vom Spindelkopf 110 her mit Druckluft beaufschlagt werden können. Die Versorgungsbohrungen 272 enden in einem Ringraum 273 am distalen Ende der Basiseinheit 120. Der Ringraum 273 ist durch eine dezentral und schräg verlaufende Durchleitungsbohrung 274 mit der zentralen Bohrung des ersten Zwischenstücks 210 verbunden, wobei die Durchleitungsbohrung 274 an einer Mündungsstelle 212 in die zentrale Bohrung mündet. Zwischen dem der Betätigungsstange 260 und der Innenwand der zentralen Bohrungen im ersten und zweiten Zwischenstück 210, 220 besteht genügend radiales Spiel, um die Druckluft ohne übermässigen Druckverlust weiter durch den entsprechenden Zwischenraum zu leiten. Die Druckluft gelangt so in den Bohrungsbereich unmittelbar proximal vom Spannzylinder 240. Von hier verlaufen schräge Verbindungsbohrungen 275 durch den Grundkörper 231 des Hydro-Dehnspanndorns 230 zu einem Ringraum 276 auf der radialen Aussenseite des Grundkörpers 231 (siehe Fig. 3). Radiale Durchstiche 277 durch die Wand der Dehnbüchse 242 und daran anschliessende, schräg verlaufende Düsenzufuhrbohrungen 278 in der Auflagehülse 270 leiten die Druckluft schliesslich zu den Messdüsen 271.

Die zentralen Bohrungen des ersten und zweiten Zwischenstücks 210, 220 sind in der proximalen Richtung gegenüber der Betätigungsstange 260 durch einen Dichtring 261 abgedichtet, der sich proximal von der Mündungsstelle 212 befindet. Die beiden Zwischenstücke 210, 220 und der Grundkörper 231 des Hydro-Dehnspanndorns 230 sind ebenfalls gegeneinander abgedichtet. In der distalen Richtung sind die zentralen Bohrungen durch den luftdicht in den Grundkörper 231 des Hydro-Dehnspanndorns 230 eingepassten Spannzylinder 240 abgedichtet. Dadurch kann keine Luft unerwünscht aus den zentralen Bohrungen entweichen.

Um die korrekte Auflage des Werkstücks 300 auf der Auflagehülse 270 zu prüfen, wird Druckluft in die Versorgungsbohrungen 272 gepresst, und es wird die Durchflussrate oder der Staudruck der Druckluft gemessen. Durchflussrate und Staudruck hängen vom Abstand des Werkstücks 300 von der Werkstück-Auflagefläche ab. Wenn das Werkstück 300 vollständig auf dieser Auflagefläche aufliegt, verschliesst es die Messdüsen 271, wodurch sich Durchflussrate und Staudruck verändern. Auf diese Weise kann in an sich bekannter Weise auf die korrekte Auflage des Werkstücks geschlossen werden.

### Herstellung einer Spannvorrichtung gemäss einer Ausführungsform der Erfindung

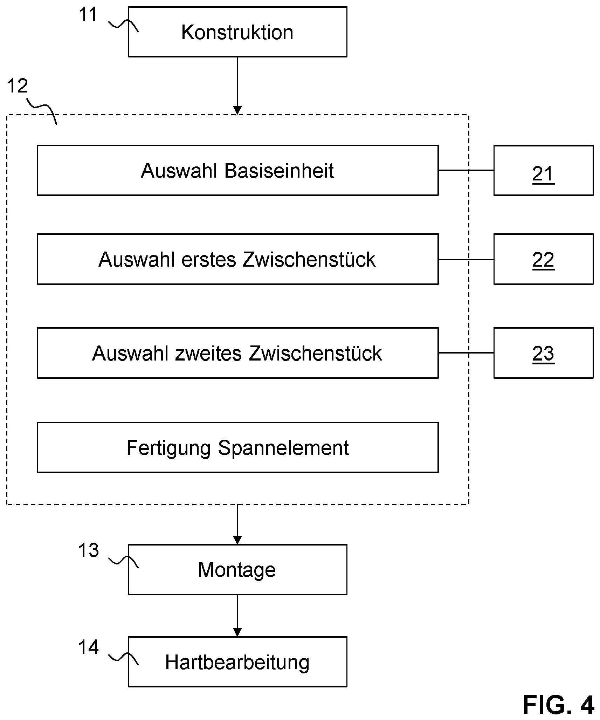

Anhand der Fig. 4 wird nun ein vorteilhaftes Verfahren zur Herstellung einer Spannvorrichtung gemäss einer Ausführungsform der Erfindung erläutert.

Der Hersteller stellt verschiedene Sortimente von standardisierten, vorgefertigten Bauteilen bereit. Insbesondere stellt der Hersteller ein Sortiment 21 von Standard-Basiseinheiten, ein Sortiment 22 von ersten Standard-Zwischenstücken und ein Sortiment 23 von zweiten Standard-Zwischenstücken bereit.

Jede Standard-Basiseinheit im Sortiment 21 weist an ihrem proximalen Ende eine von mehreren unterschiedlichen Schnittstellen zu verschiedenen Spindelköpfen und an ihrem distalen Ende eine von mehreren standardisierten Schnittstellen zum ersten Zwischenstück auf. Entsprechend weisen jedes der ersten Standard-Zwischenstücke im Sortiment 22 an seinem proximalen Ende eine standardisierte Schnittstelle zur Basiseinheit und an ihrem distalen Ende eine standardisierte Schnittstelle zu einem zweiten Zwischenstück oder zu einem Spannelement auf. Jedes der zweiten Standard-Zwischenstücke im Sortiment 23 ist an seinem proximalen Ende an die standardisierten Schnittstellen der ersten Standard-Zwischenstücke angepasst. An ihrem distalen Ende stellt es eine standardisierte Schnittstelle zu einem Spannelement bereit. Die standardisierten Schnittstellen können sich z.B. hinsichtlich ihrer Dimensionen und ihres Lochbilds unterscheiden.

Bei der Konstruktion der Spannvorrichtung (Schritt 11) berücksichtigt der Konstrukteur die zur Verfügung stehenden Standard-Basiseinheiten und Standard-Zwischenstücke in den Sortimenten 21, 22 und 23 und konstruiert ein werkstückspezifisches Spannelement. Zur Herstellung werden dann eine passende Basiseinheit aus dem Sortiment 21, ein passendes erstes Zwischenstück aus dem Sortiment 22 und ein passendes zweites Zwischenstück aus dem Sortiment 23 ausgewählt, und es wird das werkstückspezifische Spannelement gefertigt (Schritt 12). Diese Bauteile werden dann montiert (Schritt 13) und hartbearbeitet (Schritt 14).

Die Basiseinheit kann auch entfallen. In diesem Fall wird das erste Zwischenstück direkt auf den Spindelkopf montiert. Statt zwei Zwischenstücken kann auch nur ein einziges Zwischenstück zum Einsatz kommen, oder es können mehr als zwei Zwischenstücke vorgesehen sein.

### Spannvorrichtung nach dem Stand der Technik

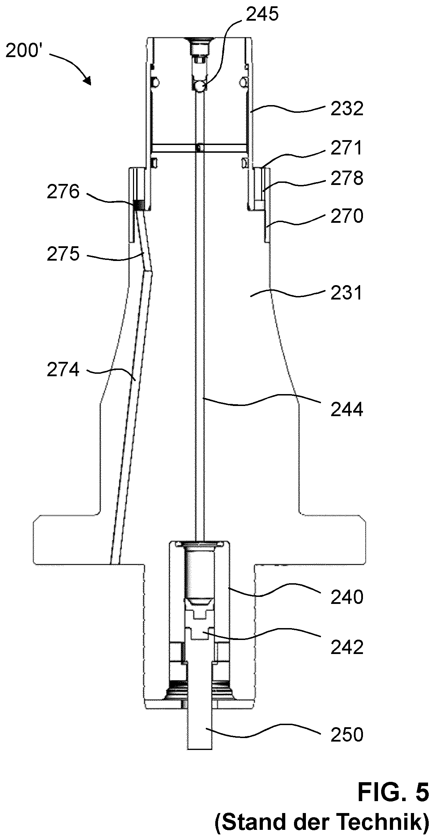

Fig. 5 zeigt beispielhaft eine Spannvorrichtung 200' nach dem Stand der Technik. Diese Spannvorrichtung entspricht in ihrer Funktionsweise weitgehend der Spannvorrichtung 200 des vorstehend erläuterten Ausführungsbeispiels, unterscheidet sich von dieser aber durch ihren Aufbau. Gleichwirkende Elemente sind mit denselben Bezugszeichen wie in den Figuren 1 bis 3 versehen.

Anders als im vorstehend erläuterten Ausführungsbeispiel sind keine Zwischenstücke 210, 220 vorhanden, sondern die Spannvorrichtung 200' bildet direkt einen Hydro-Dehnspanndorn, dessen Grundkörper 231 sich einstückig von der Dehnbüchse 232 bis zum proximalen Ende der Spannvorrichtung 200' erstreckt. Der Spannzylinder 240 mit dem darin verschieblichen Spannkolben 242 befindet sich in diesem Grundkörper 231 nahe zu dessen proximalem Ende, verhältnismässig weit von der Dehnbüchse 232 entfernt. Entsprechend sind die Hydraulikbohrungen 244 sehr viel länger als im vorstehend erläuterten Ausführungsbeispiel. Die Hydraulikbohrungen 244 sind dadurch schwieriger zu fertigen, benötigen mehr Hydraulikmedium und sind auch schwieriger zu entlüften.

Anders als im vorstehend erläuterten Ausführungsbeispiel führen ausserdem die Durchleitungsbohrung 274 und die Verbindungsbohrung 275 der Auflagekontrollvorrichtung nicht zur zentralen Bohrung eines Zwischenstücks, sondern sind direkt dezentral miteinander verbunden. Insbesondere die Durchleitungsbohrung 274 ist dadurch erheblich länger als im vorstehend erläuterten Ausführungsbeispiel und entsprechend schwieriger zu fertigen, zumal sich die beiden schräg verlaufenden Bohrungen 274, 275 im Inneren des Grundkörpers 241 exakt treffen müssen.

### Vorteile der Erfindung

Aus einem Vergleich des vorstehend erläuterten Ausführungsbeispiels mit der Spannvorrichtung nach dem Stand der Technik wird Folgendes deutlich:
a) Durch den modularen Aufbau der Spannvorrichtung mit mehreren axial hintereinander angeordneten, flexibel einsetzbaren, standardisierten Bauteilen wird eine einfache Anpassung an verschiedenartige Werkstücke ermöglicht. Es muss nicht mehr die gesamte Spannvorrichtung werkstückspezifisch gefertigt werden, sondern es genügt, nur den Hydro-Dehnspanndorn 230 werkstückspezifisch auszubilden. Die zwischen dem Spindelkopf 110 und dem Hydro-Dehnspanndorn 230 angeordneten Bauteile, insbesondere die Basiseinheit 120 und die Zwischenstücke 210, 220, können standardisiert gefertigt und bereitgestellt werden. Beispielsweise genügt es, ein kleines Sortiment von Basiseinheiten mit einem einzigen Typ pro Motorspindeltyp bereitzustellen. Auch genügt es, begrenzte Sortimente an ersten und zweiten Zwischenstücken 210, 220 in wenigen standardisierten Grössen bereitzustellen, um die nötigen Anpassungen von Durchmesser und Länge zu erreichen. Das Produktionsrisiko wird dadurch stark gesenkt. Es brauchen nur wenige verschieden dimensionierte Ausführungen der standardisierten Bauelemente vorrätig gehalten zu werden, um eine grosse Bandbreite möglicher Werkstückformen und Werkstückdimensionen abdecken zu können. Die Herstellung von Spannvorrichtungen wird durch dieses modulare System erheblich vereinfacht, und der Zeitbedarf zwischen Bestelleingang und Auslieferung wird massiv verkürzt.
b) Indem der Spannzylinder 240 gegenüber dem Stand der Technik weit in Richtung des distalen Endes der Spannvorrichtung verschoben wurde, können die Hydraulikbohrungen 244 sehr kurz gehalten werden. Dadurch wird die Fertigung deutlich vereinfacht. Das benötigte Volumen des Hydraulikmediums wird zudem deutlich reduziert, und das Befüllen und Entlüften wird vereinfacht. Durch das verringerte Volumen werden zudem Effekte reduziert, die durch die endliche Kompressibilität des Hydraulikmediums verursacht werden. Ein Hydraulikmedium ist in der Praxis nicht vollständig inkompressibel. Die endliche Kompressibilität des Mediums macht sich insbesondere dadurch bemerkbar, dass ein wesentlich grösserer Hub des Spannkolbens benötigt wird, als dies bei einem inkompressiblen Medium der Fall wäre. Dieser nachteilige Effekt wird durch das verringerte Volumen markant reduziert.
c) Indem die Druckluft für die pneumatische Auflagekontrolle in mindestens einem Abschnitt durch eine zentrale Bohrung eines oder mehrerer Bauteile der Spannvorrichtung geführt wird, können die benötigten separaten Bohrungen für die Druckluftzufuhr sehr kurz gehalten werden. Dies gilt in besonderem Masse für die fertigungstechnisch heiklen, schräg verlaufenden Bohrungen 274, 275.

### Abwandlungen

Während die Erfindung vorstehend anhand eines Ausführungsbeispiels beispielhaft erläutert wurde, sind viele Abwandlungen möglich, ohne den Bereich der Erfindung zu verlassen. So kann statt eines Hydro-Dehnspanndorns auch ein rein mechanisch expandierendes Dehnspannelement zum Einsatz kommen. Insbesondere lässt sich auch mit einem mechanischen Spannelement die vorstehend erläuterte pneumatische Auflagekontrollvorrichtung mit sehr kurzen Bohrungen realisieren. Eine pneumatische Auflagekontrollvorrichtung kann aber auch entfallen.

Auch andere Spannelemente als radial nach aussen wirkende Spannelemente sind denkbar, beispielsweise radial nach innen als Futter wirkende Spannelemente.

Die Betätigung des Spannelements braucht nicht notwendig mit einer auf Druck wirkenden Betätigungsstange zu erfolgen. Es ist stattdessen auch denkbar, das Spannelement so auszubilden, dass es auf Zug betätigbar ist. In diesem Fall kann statt einer auf Druck wirkenden Betätigungsstange eine auf Zug wirkende Stange vorgesehen sein, um den Spannkolben zu betätigen.

Die Spannvorrichtung kann in an sich bekannter Weise als passive Spannvorrichtung ausgebildet sein, so dass sie ihre Spannkraft ohne äussere Krafteinwirkung erbringt und stattdessen das Entspannen durch eine Krafteinleitung erfolgt. Im Fall eines hydraulisch wirkenden Spannelements kann dazu der Spannkolben mit einem Federelement vorgespannt sein, um die Spannkraft zu erzeugen, und eine auf Druck oder Zug wirkende Stange dient dazu, der Federvorspannung entgegenzuwirken, um die Spannkraft zu lösen. Eine erfindungsgemäss hergestellte Spannvorrichtung kann nicht nur zum Aufspannen von verzahnten Werkstücken auf einer Werkstückspindel einer Verzahnmaschine eingesetzt werden, sondern z.B. auch zum Aufspannen von beliebigen rotierenden Werkstücken auf einer Werkstückspindel einer andersartigen Werkzeugmaschine oder auf einer Antriebsspindel einer Messmaschine. Auch ist es grundsätzlich denkbar, gemäss dem erfindungsgemässen Konzept ein Werkzeugspannmittel aufzubauen. Insofern ist die Erfindung nicht auf eine bestimmte Art von aufzuspannenden Rotationskörpern beschränkt.

**BEZUGSZEICHENLISTE**

| | | | |
|---|---|---|---|
| 110 | Spindelkopf | 246 | Kolbenstange |
| 200, 200' | Spannvorrichtung | 260 | Betätigungsstange |
| 120 | Basiseinheit | 261 | Dichtring |
| 210 | erstes Zwischenstück | 262 | proximales Ende |
| 211 | Schraube | 270 | Auflagehülse |
| 212 | Mündungsstelle | 271 | Messdüse |
| 220 | zweites Zwischenstück | 272 | Versorgungsbohrung |
| 230 | Hydro-Dehnspanndorn | 273 | Ringraum |
| 231 | Grundkörper | 274 | Durchleitungsbohrung |
| 232 | Dehnbüchse | 275 | Verbindungsbohrung |
| 233 | Dehnkammer | 276 | Ringraum |
| 240 | Spannzylinder | 277 | Durchstich |
| 241 | Hydraulikreservoir | 278 | Düsenzufuhrbohrung |
| 242 | Spannkolben | 300 | Werkstück |
| 243 | Dichtungselement | 11-14 | Verfahrensschritte |
| 244 | Hydraulikbohrung | 21-23 | Sortimente |
| 245 | Befüllventil | C | Längsachse |

## Patentansprüche

1. Verfahren zur Herstellung einer modularen Spannvorrichtung (200) zum Aufspannen eines rotationssymmetrischen Körpers (300) auf einem Spindelkopf (110) einer Motorspindel, um den rotationssymmetrischen Körper (300) zu einer Drehung um eine Längsachse (C) der Spannvorrichtung (200) anzutreiben, wobei die modulare Spannvorrichtung (200) ein Spannelement (230), das dazu ausgebildet ist, eine Spannverbindung mit dem rotationssymmetrischen Körper (300) herzustellen, und ein erstes Zwischenstück (210) aufweist,
das Verfahren aufweisend die Schritte:
Bereitstellen eines ersten Zwischenstücksortiments (22) mit einer Mehrzahl von vorgefertigten, standardisierten ersten Standard-Zwischenstücken, wobei jedes der ersten Standard-Zwischenstücke ein proximales Ende und ein distales Ende aufweist, wobei jedes der ersten Standard-Zwischenstücke an seinem proximalen Ende eine Schnittstelle zum Spindelkopf (110) oder zu einer auf dem Spindelkopf (110) angeordneten Basiseinheit (120) bereitstellt, und wobei jedes der ersten Standard-Zwischenstücke an seinem distalen Ende eine Schnittstelle für ein zweites Zwischenstück (220) oder für ein Spannelement (230) bereitstellt, wobei sich die Schnittstellen am proximalen und/oder distalen Ende innerhalb des ersten Zwischenstücksortiments (22) unterscheiden;
Auswählen des ersten Zwischenstücks (210) aus dem ersten Zwischenstücksortiment (22);
Anfertigen des Spannelements (230); und
Anordnen des ersten Zwischenstücks (210) relativ zum Spannelement (230) derart, dass das erste Zwischenstück (210) bezüglich der Längsachse (C) in axialer Richtung zwischen dem Spindelkopf (110) und dem Spannelement (230) angeordnet ist, wenn die Spannvorrichtung (200) am Spindelkopf (110) angebracht wird.

2. Verfahren nach Anspruch 1, wobei die Spannvorrichtung ausserdem ein zweites Zwischenstück (220) aufweist,
das Verfahren ausserdem aufweisend die Schritte:
Bereitstellen eines zweiten Zwischenstücksortiments (23) mit einer Mehrzahl von vorgefertigten, standardisierten zweiten Standard-Zwischenstücken, wobei jedes der zweiten Standard-Zwischenstücke ein proximales Ende und ein distales Ende aufweist, wobei jedes der zweiten Standard-Zwischenstücke an seinem proximalen Ende eine Schnittstelle zu einem ersten Standard-Zwischenstück des ersten Zwischenstücksortiments (22) bereitstellt, und wobei jedes der zweiten Standard-Zwischenstücke eine Schnittstelle für das Spannelement (230) oder für ein weiteres Zwischenstück bereitstellt;
Auswählen des zweiten Zwischenstücks (220) aus dem zweiten Zwischenstücksortiment (23); und
Anordnen des ausgewählten zweiten Zwischenstücks (220) in axialer Richtung zwischen dem ausgewählten ersten Zwischenstück (210) und dem Spannelement (230).

3. Verfahren nach Anspruch 2, wobei das erste Zwischenstück (210) eine durchgehende zentrale Bohrung entlang der Längsachse (C) aufweist, und
wobei das zweite Zwischenstück (220) eine durchgehende zentrale Bohrung entlang der Längsachse (C) aufweist, die sich in axialer Richtung an die durchgehende zentrale Bohrung des ersten Zwischenstücks (210) anschliesst.

4. Verfahren nach einem der vorhergehenden Ansprüche, wobei die modulare Spannvorrichtung ausserdem eine Basiseinheit (120) aufweist,
das Verfahren ausserdem aufweisend die Schritte:
Bereitstellen eines Basiseinheitensortiments (21) mit einer Mehrzahl von vorgefertigten, standardisierten Standard-Basiseinheiten, wobei jede der Standard-Basiseinheiten ein proximales Ende und ein distales Ende aufweist, wobei jede der Standard-Basiseinheiten an ihrem proximalen Ende eine Schnittstelle zum Spindelkopf (110) bereitstellt, und wobei jede der Standard-Basiseinheiten an ihrem distalen Ende eine Schnittstelle zu einem ersten Standard-Zwischenstück aus dem ersten Zwischenstücksortiment (22) bereitstellt;
Auswählen der Basiseinheit (120) aus dem Basiseinheitensortiment (21); und
Anordnen der ausgewählten Basiseinheit (120) relativ zum ersten Zwischenstück (210) derart, dass die Basiseinheit (120) in axialer Richtung zwischen dem Spindelkopf (110) und dem ersten Zwischenstück (210) angeordnet ist, wenn die Spannvorrichtung (200) am Spindelkopf (110) angebracht wird.

5. Verfahren nach einem der vorhergehenden Ansprüche, wobei das Spannelement (230) ein hydraulisches Spannelement (230) ist, das dazu ausgebildet ist, die Spannverbindung mit dem rotationssymmetrischen Körper (300) unter Einwirkung eines hydraulischen Drucks herzustellen, wobei das hydraulische Spannelement (230) einen Spannzylinder (240) und einen darin verschiebbar angeordneten Spannkolben (242) zur Veränderung des hydraulischen Drucks aufweist,
wobei das erste Zwischenstück (210) eine durchgehende zentrale Bohrung entlang der Längsachse (C) aufweist, und
wobei die Spannvorrichtung (200) ein Betätigungselement (260) für den Spannkolben (242) aufweist, das in der zentralen Bohrung des ersten Zwischenstücks (210) angeordnet ist und axial entlang der Längsachse (C) in der zentralen Bohrung bewegbar ist.

6. Verfahren nach einem der Ansprüche 1-4, wobei die Spannvorrichtung ein Auflageelement (270) zur axialen Auflage des rotationssymmetrischen Körpers (300), wenn der rotationssymmetrischen Körper (300) auf der Spannvorrichtung (200) aufgespannt ist, aufweist,
wobei die Spannvorrichtung (200) eine pneumatische Auflagekontrollvorrichtung aufweist, die mindestens eine im Auflageelement (270) angeordnete Messdüse (271) umfasst, und
wobei das erste Zwischenstück (210) eine dezentral verlaufende Durchleitungsbohrung (274) zur Durchleitung eines Messfluids, insbesondere von Druckluft, für die Messdüse (271) aufweist.

7. Verfahren nach Anspruch 6,
wobei das erste Zwischenstück (210) ausserdem eine durchgehende zentrale Bohrung entlang der Längsachse (C) aufweist, und
wobei die Durchleitungsbohrung (274) an einer Mündungsstelle (212) in die zentrale Bohrung des ersten Zwischenstücks (210) hinein mündet, so dass das Messfluid durch die zentrale Bohrung des ersten Zwischenstücks (210) hindurch zur Messdüse (271) führbar ist.

8. Verfahren nach Anspruch 7, wobei die Spannvorrichtung (200) mindestens eine Verbindungsleitung (275, 276, 277, 278) für das Messfluid aufweist, die dazu ausgebildet ist, Messfluid, das in die zentrale Bohrung des ersten Zwischenstücks (210) geleitet wurde, zur Messdüse (271) zu leiten.

9. Verfahren nach Anspruch 7 oder 8,
wobei die Spannvorrichtung (200) ein Betätigungselement (260) zum Betätigen des Spannelements (230) aufweist,
wobei das Betätigungselement (260) in der zentralen Bohrung des ersten Zwischenstücks (210) angeordnet ist und axial entlang der zentralen Längsachse (C) in der zentralen Bohrung bewegbar ist.

10. Verfahren nach Anspruch 9,
wobei das Betätigungselement (260) in der Bohrung des ersten Zwischenstücks (210) derart mit radialem Spiel angeordnet ist, dass zwischen dem Betätigungselement (260) und einem die Bohrung begrenzenden Wandbereich des ersten Zwischenstücks (210) ein Ringraum zur Durchleitung des Messfluids verbleibt,
wobei der Ringraum in radialer Richtung eine Ausdehnung aufweist, die vorzugsweise nirgends grösser als 1 mm, besonders bevorzugt nirgends grösser als 0.5 mm, ist, um ein Totvolumen für das Messfluid zu reduzieren, und
wobei vorzugsweise zwischen dem Betätigungselement (260) und dem ersten Zwischenstück (210) in einem proximal von der Mündungsstelle (212) gelegenen Bereich eine umlaufende Dichtung (261) ausgebildet ist, um ein Entweichen des Messfluids in proximaler Richtung zu verhindern.

11. Verfahren nach Anspruch 9 oder 10,
wobei das Spannelement (230) ein hydraulisches Spannelement ist, das dazu ausgebildet ist, die Spannverbindung unter Einwirkung eines hydraulischen Drucks herzustellen,
wobei das hydraulische Spannelement einen Spannzylinder (240) und einen darin verschiebbar angeordneten Spannkolben (242) zur Veränderung des hydraulischen Drucks aufweist, und
wobei der Spannkolben (242) durch das Betätigungselement (260) betätigbar ist.

12. Verfahren nach Anspruch 5 oder 11,
wobei die modulare Spannvorrichtung weiter aufweist:
eine Kolbenstange (246), die mit dem Spannkolben (242) zusammenwirkt, um den Spannkolben (242) entlang der Längsachse (C) zu verschieben, wobei die Kolbenstange (246) in einer proximalen Richtung aus dem Spannelement (230) herausragt,
wobei das Betätigungselement (260) ein distales Ende aufweist, das mit der Kolbenstange (246) zusammenwirkt, um die Kolbenstange (246) entlang der Längsachse (C) zu verschieben, und
wobei das Betätigungselement (260) ein proximales Ende (263) aufweist, das in der proximalen Richtung aus dem ersten Zwischenstück (220) herausragt, um eine Betätigung des Betätigungselements (260) zu ermöglichen.

13. Verfahren nach einem der vorhergehenden Ansprüche, aufweisend:
Anbringen der Spannvorrichtung am Spindelkopf (110) derart, dass das erste Zwischenstück (210) bezüglich der Längsachse (C) in axialer Richtung zwischen dem Spindelkopf (110) und dem Spannelement (230) angeordnet ist.

## Claims

1. A method of manufacturing a modular clamping device (200) for clamping a rotationally symmetrical body (300) on a spindle head (110) of a motor spindle to drive the rotationally symmetrical body (300) to rotate about a longitudinal axis (C) of the clamping device (200), the modular clamping device (200) comprising a clamping element (230) configured to establish a clamping connection with the rotationally symmetrical body (300) and a first intermediate piece (210),
the method comprising the steps of:
providing a first intermediate piece assortment (22) comprising a plurality of prefabricated, standardized first standard intermediate pieces, each of said first standard intermediate pieces having a proximal end and a distal end, wherein each of said first standard intermediate pieces provides at its proximal end an interface to the spindle head (110) or to a base unit (120) arranged on the spindle head (110), and wherein each of the first standard intermediate pieces provides at its distal end an interface for a second intermediate piece (220) or for a clamping element (230), wherein the interfaces at the proximal and/or distal end differ within the first intermediate piece assortment (22);
selecting the first intermediate piece (210) from the first intermediate piece assortment (22);
manufacturing the clamping element (230); and
arranging the first intermediate piece (210) relative to the clamping element (230) in such a way that the first intermediate piece (210) is arranged in axial direction with respect to the longitudinal axis (C) between the spindle head (110) and the clamping element (230) when the clamping device (200) is mounted to the spindle head (110).

2. The method of claim 1, wherein the clamping device further comprises a second intermediate piece (220),
the method further comprising the steps of:
providing a second intermediate piece assortment (23) comprising a plurality of prefabricated, standardized second standard intermediate pieces, each of said second standard intermediate pieces having a proximal end and a distal end, wherein each of the second standard intermediate pieces provides an interface at its proximal end to a first standard intermediate piece of the first intermediate piece assortment (22), and wherein each of the second standard intermediate pieces provides an interface for the clamping element (230) or for a further intermediate piece;
selecting the second intermediate piece (220) from the second intermediate piece assortment (23); and
arranging the selected second intermediate piece (220) in axial direction between the selected first intermediate piece (210) and the clamping element (230).

3. The method of claim 2, wherein the first intermediate piece (210) has a continuous central bore along the longitudinal axis (C), and
wherein the second intermediate piece (220) has a continuous central bore along the longitudinal axis (C) that adjoins the continuous central bore of the first intermediate piece (210) in axial direction.

4. The method of any one of the preceding claims, wherein the modular clamping device further comprises a base unit (120),
the method further comprising the steps of:
providing a base unit assortment (21) comprising a plurality of prefabricated standardized base units, each of the standard base units having a proximal end and a distal end, wherein each of the standard base units provides an interface to the spindle head (110) at its proximal end, and wherein each of the standard base units provides an interface to a first standard intermediate piece from the first intermediate piece assortment (22) at its distal end;
selecting the base unit (120) from the base unit assortment (21); and
arranging the selected base unit (120) relative to the first intermediate piece (210) such that the base unit (120) is arranged in axial direction between the spindle head (110) and the first intermediate piece (210) when the clamping device (200) is mounted to the spindle head (110).

5. The method of any one of the preceding claims, wherein the clamping element (230) is a hydraulic clamping element (230) configured to establish the clamping connection with the rotationally symmetrical body (300) under the action of a hydraulic pressure, wherein the hydraulic clamping element (230) comprises a clamping cylinder (240) and a clamping piston (242) displaceably arranged therein for varying the hydraulic pressure,
wherein the first intermediate piece (210) has a continuous central bore along the longitudinal axis (C), and
wherein the clamping device (200) comprises an actuating element (260) for the clamping piston (242), the actuating element (260) being arranged in the central bore of the first intermediate piece (210) and being axially movable along the longitudinal axis (C) in the central bore.

6. The method of any one of claims 1-4, wherein the clamping device comprises a support element (270) for axially supporting the rotationally symmetrical body (300) when the rotationally symmetrical body (300) is clamped on the clamping device (200),
wherein the clamping device (200) comprises a pneumatic seat checking device comprising at least one measurement nozzle (271) arranged in the support element (270), and
wherein the first intermediate piece (210) has a decentrally extending conduit bore (274) for guiding a measurement fluid, in particular compressed air, for the measurement nozzle (271).

7. The method of claim 6,
wherein the first intermediate piece (210) comprises a continuous central bore along the longitudinal axis (C), and
wherein the conduit bore (274) opens into the central bore of the first intermediate piece (210) at an opening (212), so that the measurement fluid can be guided through the central bore of the first intermediate piece (210) to the measurement nozzle (271).

8. The method of claim 7, wherein the clamping device (200) comprises at least one connection conduit (275, 276, 277, 278) for the measurement fluid, wherein the at least one connection conduit is configured to guide measurement fluid that has been guided into the central bore of the first intermediate piece (210) to the measurement nozzle (271).

9. The method of claim 7 or 8,
wherein the clamping device (200) comprises an actuating element (260) for actuating the clamping element (230),
wherein the actuating element (260) is arranged in the central bore of the first intermediate piece (210) and is axially movable along the central longitudinal axis (C) in the central bore.

10. The method of claim 9,
wherein the actuating element (260) is arranged in the central bore of the first intermediate piece (210) with radial play in such a way that an annular space remains for the passage of the measurement fluid between the actuating element (260) and a wall region of the first intermediate piece (210) delimiting the central bore,
wherein the annular space has an extension in the radial direction which is preferably nowhere greater than 1 mm, particularly preferably nowhere greater than 0.5 mm, in order to reduce a dead volume for the measurement fluid, and
wherein a circumferential seal (261) is preferably formed between the actuating element (260) and the first intermediate piece (210) in a region proximal to the opening (212) to prevent the measurement fluid from escaping in the proximal direction.

11. The method of claim 9 or 10,
wherein the clamping element (230) is a hydraulic clamping element configured to establish the clamping connection under the action of a hydraulic pressure,
wherein the hydraulic clamping element comprises a clamping cylinder (240) and a clamping piston (242) displaceably arranged therein for varying the hydraulic pressure, and
wherein the clamping piston (242) is actuable by the actuating element (260).

12. The method of claim 5 or 11,
wherein the modular clamping device further comprises:
a piston rod (246) acting in conjunction with the clamping piston (242) to displace the clamping piston (242) along the longitudinal axis (C), wherein the piston rod (246) protrudes from the clamping element (230) in a proximal direction,
wherein the actuating element (260) has a distal end that acts in conjunction with the piston rod (246) to displace the piston rod (246) along the longitudinal axis (C), and
wherein the actuating element (260) has a proximal end (263) that protrudes in the proximal direction from the first intermediate piece (220) to allow actuation of the actuating element (260).

13. The method of any one of the preceding claims, comprising:
mounting the clamping device on the spindle head (110) in such a way that the first intermediate piece (210) is arranged between the spindle head (110) and the clamping element (230) in the axial direction with respect to the longitudinal axis (C).

## Revendications

1. Un procédé de fabrication d'un dispositif de serrage modulaire (200) destiné à fixer un corps à symétrie de révolution (300) sur une tête de broche (110) d'une broche de moteur afin d'entraîner la rotation du corps à symétrie de révolution (300) autour d'un axe longitudinal (C) du dispositif de serrage (200), le dispositif de serrage modulaire (200) présentant un élément de serrage (230) configuré pour établir une liaison de serrage avec le corps à symétrie de révolution (300) et une première pièce intermédiaire (210), le procédé comprenant les étapes suivantes :
- fournir un premier assortiment de pièces intermédiaires (22) comprenant une pluralité de premières pièces intermédiaires standard préfabriquées et standardisées, chacune des premières pièces intermédiaires standard possédant une extrémité proximale et une extrémité distale, chacune des premières pièces intermédiaires standard fournissant une interface, à son extrémité proximale, pour la tête de broche (110) ou pour une unité de base (120) disposée sur la tête de broche (110), et chacune des premières pièces intermédiaires standard fournissant une interface, à son extrémité distale, pour une deuxième pièce intermédiaire (220) ou pour un élément de serrage (230), les interfaces à l'extrémité proximale et/ou à l'extrémité distale étant différentes au sein du premier assortiment de pièces intermédiaires (22) ;
- sélectionner la première pièce intermédiaire (210) à partir du premier assortiment de pièces intermédiaires (22) ;
- fabriquer l'élément de serrage (230) ; et
- disposer la première pièce intermédiaire (210) par rapport à l'élément de serrage (230) de telle sorte que la première pièce intermédiaire (210) soit disposée dans la direction axiale entre la tête de broche (110) et l'élément de serrage (230) par rapport à l'axe longitudinal (C), lorsque le dispositif de serrage (200) est fixé à la tête de broche (110).

2. Le procédé selon la revendication 1, dans lequel le dispositif de serrage comprend en outre une seconde pièce intermédiaire (220), le procédé comprenant en outre les étapes suivantes :
- fournir un deuxième assortiment de pièces intermédiaires (23) comprenant une pluralité de deuxièmes pièces intermédiaires standard préfabriquées et standardisées, chacune des deuxièmes pièces intermédiaires standard possédant une extrémité proximale et une extrémité distale, chacune des deuxièmes pièces intermédiaires standard fournissant une interface pour une première pièce intermédiaire standard du premier assortiment de premières pièces intermédiaires (22) à son extrémité proximale, et chacune des deuxièmes pièces intermédiaires standard fournissant une interface pour l'élément de serrage (230) ou pour une autre pièce intermédiaire ;
- sélectionner la deuxième pièce intermédiaire (220) parmi l'assortiment de deuxième pièces intermédiaires (23) ; et
- disposer la deuxième pièce intermédiaire sélectionnée (220) dans la direction axiale entre la première pièce intermédiaire sélectionnée (210) et l'élément de serrage (230).

3. Procédé selon la revendication 2, dans lequel la première pièce intermédiaire (210) comporte un alésage central traversant le long de l'axe longitudinal (C), et
dans lequel la deuxième pièce intermédiaire (220) comporte un alésage central traversant le long de l'axe longitudinal (C) qui se joint dans la direction axiale à l'alésage central traversant de la première pièce intermédiaire (210).

4. Procédé selon l'une des revendications précédentes, dans lequel le dispositif de serrage modulaire comprend en outre une unité de base (120), le procédé comprenant en outre les étapes suivantes :
- fournir un assortiment d'unités de base (21) comprenant une pluralité d'unités de base standard préfabriquées et standardisées, chacune des unités de base standard ayant une extrémité proximale et une extrémité distale, chacune des unités de base standard fournissant une interface pour la tête de broche (110) à son extrémité proximale, et chacune des unités de base standard fournissant une interface pour une première pièce intermédiaire standard du premier assortiment de pièces intermédiaires (22) à son extrémité distale ;
- sélectionner l'unité de base (120) dans l'assortiment d'unités de base (21) ; et
- disposer l'unité de base sélectionnée (120) par rapport à la première pièce intermédiaire (210) de telle sorte que l'unité de base (120) soit disposée dans la direction axiale entre la tête de broche (110) et la première pièce intermédiaire (210) lorsque le dispositif de serrage (200) est fixé à la tête de broche (110).

5. Procédé selon l'une des revendications précédentes, dans lequel l'élément de serrage (230) est un élément de serrage hydraulique (230) conçu pour établir la liaison de serrage avec le corps à symétrie de révolution (300) sous l'influence de la pression hydraulique, dans lequel l'élément de serrage hydraulique (230) comporte un cylindre de serrage (240) et un piston de serrage (242) disposé de manière coulissante à l'intérieur de celui-ci pour modifier la pression hydraulique,
dans lequel la première pièce intermédiaire (210) comporte un alésage central continu le long de l'axe longitudinal (C), et
dans lequel le dispositif de serrage (200) comporte un élément d'actionnement (260) pour le piston de serrage (242) qui est disposé dans l'alésage central de la première pièce intermédiaire (210) et qui est mobile dans la direction axiale le long de l'axe longitudinal (C) dans l'alésage central.

6. Procédé selon l'une des revendications 1 à 4, dans lequel le dispositif de serrage comporte un élément de support (270) pour le support axial du corps à symétrie de rotation (300) lorsque le corps à symétrie de rotation (300) est serré sur le dispositif de serrage (200),
dans lequel le dispositif de serrage (200) comporte un dispositif de commande de support pneumatique comprenant au moins une buse de mesure (271) disposée dans l'élément de support (270), et
dans lequel la première pièce intermédiaire (210) comporte un alésage traversant décentralisé (274) pour le passage d'un fluide de mesure, en particulier de l'air comprimé, destiné pour la buse de mesure (271).

7. Procédé selon la revendication 6, dans lequel la première pièce intermédiaire (210) comporte également un alésage central continu le long de l'axe longitudinal (C), et
dans lequel l'alésage traversant (274) s'ouvre dans l'alésage central de la première pièce intermédiaire (210) au niveau d'une embouchure (212), de sorte que le fluide de mesure puisse être guidé à travers l'alésage central de la première pièce intermédiaire (210) jusqu'à la buse de mesure (271).

8. Procédé selon la revendication 7, dans lequel le dispositif de serrage (200) comporte au moins une ligne de connexion (275, 276, 277, 278) pour le fluide de mesure, conçue pour diriger le fluide de mesure, ayant été dirigé dans l'alésage central de la première pièce intermédiaire (210), vers la buse de mesure (271).

9. Procédé selon la revendication 7 ou 8,
dans lequel le dispositif de serrage (200) comporte un élément d'actionnement (260) destiné à actionner l'élément de serrage (230),
dans lequel l'élément d'actionnement (260) est disposé dans l'alésage central de la première pièce intermédiaire (210) et est mobile dans la direction axiale le long de l'axe longitudinal central (C) dans l'alésage central.

10. Procédé selon la revendication 9,
dans lequel l'élément d'actionnement (260) est disposé dans l'alésage de la première pièce intermédiaire (210) avec un jeu en direction radiale de sorte qu'un espace annulaire pour le passage du fluide de mesure reste entre l'élément d'actionnement (260) et une zone de paroi de la première pièce intermédiaire (210) limitant l'alésage,
dans lequel l'espace annulaire présente une dimension en direction radiale qui, de préférence, ne dépasse nulle part 1 mm, et plus particulièrement, de préférence, ne dépasse nulle part 0,5 mm, afin de réduire le volume mort du fluide de mesure, et
dans lequel de préférence un joint circonférentiel (261) est formé entre l'élément d'actionnement (260) et la première pièce intermédiaire (210) dans une zone située à proximité de l'embouchure (212), afin d'empêcher le fluide de mesure de s'échapper dans la direction proximale.

11. Procédé selon la revendication 9 ou 10,
dans lequel l'élément de serrage (230) est un élément de serrage hydraulique conçu pour établir la connexion de serrage sous l'influence de la pression hydraulique,
dans lequel l'élément de serrage hydraulique comprend un cylindre de serrage (240) et un piston de serrage (242) disposés de manière coulissante à l'intérieur de celui-ci pour modifier la pression hydraulique, et
dans lequel le piston de serrage (242) peut être actionné par l'élément d'actionnement (260).

12. Procédé selon la revendication 5 ou 11,
dans lequel le dispositif de serrage modulaire comprend en outre :
une tige de piston (246) qui interagit avec le piston de serrage (242) pour déplacer le piston de serrage (242) le long de l'axe longitudinal (C), dans lequel la tige de piston (246) dépasse de l'élément de serrage (230) dans une direction proximale,
dans lequel l'élément d'actionnement (260) possède une extrémité distale, qui interagit avec la tige de piston (246) pour déplacer la tige de piston (246) le long de l'axe longitudinal (C), et
dans lequel l'élément d'actionnement (260) possède une extrémité proximale (263), qui dépasse de la première pièce intermédiaire (220) dans la direction proximale, pour permettre l'actionnement de l'élément d'actionnement (260).

13. Procédé selon l'une des revendications précédentes, comprenant :
fixer le dispositif de serrage à la tête de broche (110) de sorte que la première pièce intermédiaire (210) soit disposée dans la direction axiale entre la tête de broche (110) et l'élément de serrage (230) par rapport à l'axe longitudinal (C).
